# FASCICULE DE BREVET EUROPEEN

(11) **EP 3 202 628 B1**
(45) Date de publication et mention de la délivrance du brevet: **17.10.2018**
(21) Numéro de dépôt: 17153924.0
(22) Date de dépôt: 31.01.2017
(51) Int. Cl.: B60S 1/52, B60S 1/56, G02B 27/00, B60S 1/08

(54) **SYSTEME DE DETECTION OPTIQUE POUR VEHICULE AUTOMOBILE ET DISPOSITIF DE NETTOYAGE D'UN TEL SYSTEME**
OPTISCHES ERFASSUNGSSYSTEM FÜR KRAFTFAHRZEUG, UND REINIGUNGSVORRICHTUNG EINES SOLCHEN SYSTEMS
OPTICAL DETECTION SYSTEM FOR A MOTOR VEHICLE, AND DEVICE FOR CLEANING SUCH A SYSTEM

(30) Priorité: 05.02.2016 FR 1650942
(43) Date de publication de la demande: 09.08.2017
(73) Titulaire: Valeo Systèmes d'Essuyage, 78322 Le Mesnil Saint Denis (FR)
(72) Inventeur: TREBOUET, Marcel, 78450 CHAVENAY (FR); GRASSO, Giuseppe, 63340 Le Breuil sur Couze (FR); KOLANOWSKI, Grégory, 43300 SIAUGUES SAINTE MARIE (FR)
(74) Mandataire: Vincent, Catherine Marie Marguerite

(56) Documents cités:
- EP-A1- 2 873 571
- WO-A1-2015/120866
- DE-A1- 10 225 151
- DE-A1- 10 232 227
- DE-A1- 19 541 156
- US-B1- 7 080 872

## Description

La présente invention se rapporte au domaine des dispositifs d'aide à la conduite et, plus particulièrement, au domaine des ensembles optiques utilisés à cette fin, tels que des moyens de prise de vue, en particulier des caméras. L'invention concerne plus particulièrement les dispositifs de nettoyage d'un capteur optique d'un système de détection optique pour véhicule.

Le document WO 2015/120866 A1 divulgue le préambule de la revendication indépendante 1.

On appelle système de détection optique tout système comportant des capteurs optiques, tels que des caméras, des capteurs laser (communément appelés LIDAR) ou autres capteurs basés sur l'émission et/ou la détection de la lumière dans le spectre visible ou invisible pour l'homme, en particulier l'infrarouge.

De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le système de détection optique doivent être de la meilleure qualité possible, et il est donc indispensable de disposer d'optiques propres pour réaliser ces acquisitions de données. Pour ce faire, un dispositif de nettoyage d'un capteur optique, par exemple de lentille d'une caméra, peut être commandé pour injecter, sur ladite lentille, du fluide nettoyant juste avant que soit réalisée la prise de vue. Ces dispositifs ne doivent pas gêner l'optique de prise de vue lorsque celle-ci est en fonctionnement, et ils doivent être le plus compacts possibles pour répondre aux contraintes d'encombrement du véhicule. Par ailleurs, dans le cas où le liquide de nettoyage projeté sur une telle lentille pour en chasser les salissures est un liquide, il est intéressant de sécher le plus rapidement possible cette lentille afin d'éviter tout risque de pollution de l'image par d'éventuelles traces qu'un tel liquide pourrait laisser (gouttes, coulures, etc ...). Pour cela, il est connu de projeter sur la lentille, après le liquide de nettoyage, un flux d'air qui permet de débarrasser cette lentille du liquide de nettoyage et des salissures que celui-ci entraîne alors avec lui. Ceci impose toutefois la réalisation et la gestion de deux circuits de transport de fluides, l'un pour le liquide de nettoyage, l'autre pour l'air de séchage. On connaît des dispositifs de nettoyage dans lesquels circuit de distribution de liquide de nettoyage et circuit de distribution de l'air de séchage comportent des portions communes et/ou présentent une forme d'imbrication l'un avec l'autre, mais leur réalisation mécanique présente une certaine complexité, ainsi que leur gestion dans le procédé de nettoyage.

La présente invention a pour but de simplifier un tel dispositif de nettoyage tout en conservant ses performances, et de proposer une solution alternative pour l'évacuation du liquide de nettoyage et des salissures que celui-ci peut entraîner, ainsi que pour le procédé de nettoyage en lui-même.

Dans ce but, l'invention a pour objet un dispositif de nettoyage d'un capteur optique d'un système de détection optique d'un véhicule automobile, qui comprend des moyens de projection d'un liquide de nettoyage sur une surface extérieure de ce capteur optique, caractérisé en ce qu'il comporte des moyens d'aspiration, dont une chambre débouche sur au moins une portion de la périphérie de ce capteur optique.

Selon un mode de réalisation préféré de l'invention, mais non exclusif, cette chambre débouche sur une portion de la périphérie du capteur optique sensiblement à l'opposé, par rapport au centre du capteur optique, de la région depuis laquelle le liquide de nettoyage est projeté sur la surface extérieure du capteur optique. Selon différents modes de réalisation, la chambre débouche en une ou plusieurs zones de la périphérie du capteur optique, ou débouche sur tout le pourtour du capteur optique pour former une ouverture annulaire qui s'étend sur l'ensemble de la périphérie du capteur optique.

De manière connue, le système de détection optique est inséré dans un boîtier de réception, de telle manière que la surface extérieure de son capteur optique affleure ce boîtier et permette une acquisition de données avec le plus grand angle possible. Pour ce faire, le capteur optique est classiquement accueilli dans une collerette, avantageusement réalisée dans un matériau présentant une certaine élasticité pour absorber les contraintes mécaniques qui pourraient s'exercer sur le capteur optique suite à d'éventuelles déformations et/ou vibrations du boîtier ou d'éventuels chocs sur celui-ci. Cette collerette a également une fonction d'étanchéité, en empêchant d'éventuelles salissures ou traces d'eau de pluie de pénétrer dans le boîtier de réception du système de détection optique. Avantageusement, la chambre du dispositif de nettoyage selon l'invention est agencée dans cette collerette d'accueil du capteur optique, et elle débouche à la surface extérieure de cette collerette. Le capteur optique est ajusté à l'intérieur de la collerette, et la chambre est creusée dans l'épaisseur de cette collerette, entre un bord intérieur qui vient se placer au contact du bord périphérique extérieur du capteur optique, et un bord extérieur de ladite collerette.

Selon une autre caractéristique, la chambre du dispositif de nettoyage selon l'invention comporte une lèvre d'étanchéité élastique mobile entre une position fermée dans laquelle il interdit tout passage de liquide de l'extérieur, et notamment de la surface extérieure du capteur optique, vers l'intérieur de la chambre, et une position ouverte dans laquelle il autorise le passage du liquide de nettoyage, déposé à l'origine sur le capteur optique, vers l'intérieur de la chambre. Cette lèvre d'étanchéité élastique est avantageusement rendue mobile d'une position à l'autre sous l'effet de l'actionnement de moyens d'aspiration agencés pour mettre sous vide la chambre agencée autour du capteur optique. Ces moyens d'aspiration, qui peuvent notamment comporter une pompe, sont configurés pour rejeter le liquide aspiré dans un réservoir de stockage pour l'alimentation des moyens de projection en liquide de nettoyage du capteur optique. La lèvre d'étanchéité est conformé pour prendre la position ouverte quand la pompe est actionnée et pour revenir en position d'origine, c'est-à-dire en position fermée, quand la pompe est éteinte.

De manière connue, le liquide de nettoyage est projeté sur la surface extérieure du capteur optique à travers un orifice de distribution placé à une extrémité d'une buse de distribution d'un tel dispositif de nettoyage, cette buse de distribution étant elle-même reliée, par des moyens d'acheminement appropriés, au réservoir de stockage du liquide de nettoyage.

Selon différents modes de réalisation, la buse de distribution peut avoir une position fixe par rapport à la surface extérieure du capteur optique, ou elle peut être mobile entre une position déployée, dans laquelle son orifice de distribution se trouve à proximité de la surface extérieure de ce capteur optique pour y projeter le liquide de nettoyage, et une position rétractée dans laquelle l'orifice de distribution est en retrait de la surface extérieure du capteur optique, notamment pour ne pas gêner les acquisitions de données. Quel que soit le mode de réalisation retenu pour cette buse de distribution, le dispositif de nettoyage selon l'invention comporte également des moyens d'aspiration du liquide de nettoyage.

En outre, selon différentes caractéristiques avantageuses de l'invention, prises séparément ou en combinaison :
- le profil de la collerette d'accueil de la lentille est défini pour guider vers l'ouverture débouchante de la chambre toute goutte ou trace de liquide de nettoyage qui l'atteint, en présentant notamment un bord arrondi ;
- les moyens d'aspiration peuvent être synchronisés, c'est-à-dire mis en oeuvre simultanément, avec les moyens de projection du liquide de nettoyage ;
- le capteur optique est revêtu d'une couche d'un matériau hydrophobe, afin de guider vers l'ouverture débouchante de la chambre toute goutte ou trace de liquide de nettoyage présente sur la surface extérieure de ce capteur optique.

L'invention s'étend ainsi à un système de détection optique, notamment un appareil de prise de vues, dont le capteur optique et dont la collerette d'accueil de ce capteur optique dans un boîtier de réception du système de détection optique présentent les caractéristiques qui viennent d'être décrites.

D'autres caractéristiques, détails et avantages de l'invention et de son fonctionnement ressortiront plus clairement à la lecture de la description donnée ci-après à titre indicatif, en relation avec les figures annexées, dans lesquelles :
- la figure 1 est une vue schématique en coupe d'un système de détection optique, notamment un appareil de prise de vues, et d'un dispositif de nettoyage d'un capteur optique, notamment une lentille, de ce système selon l'invention ;
- la figure 2 est une vue similaire à celle de la figure 1, illustrant plus clairement la lentille et les éléments du dispositif de nettoyage disposés autour de la lentille ;
- la figure 3 est une vue générale schématique en perspective du dispositif de nettoyage illustré sur la figure 2, rendant visible le boîtier de réception de la caméra et de la lentille associée ;
- la figure 4a et la figure 4b sont des vues de détail, en coupe, illustrant schématiquement une chambre du dispositif de nettoyage agencée autour de la lentille et deux états d'une lèvre d'étanchéité élastique associée à cette chambre, dans une position fermée (figure 4a) et dans une position ouverte (figure 4b) ; et
- la figure 5 est une vue semblable à celle de la figure 3, dans laquelle on a illustré de façon schématique le trajet du liquide de nettoyage à la surface extérieure de la lentille d'un appareil de prise de vues selon l'invention.

Dans la partie descriptive qui va suivre, on va plus particulièrement définir un système de détection optique et le capteur optique associé par l'intermédiaire d'un appareil de prise de vues comportant une caméra, accueillie dans un boîtier de réception 1 de telle manière qu'une surface extérieure 20 de sa lentille 2 soit en affleurement légèrement saillant d'une face extérieure 10 de ce boîtier. La lentille 2, ici une lentille convexe à bord circulaire, est mise en position sur cette face extérieure 10 à l'intérieur d'une collerette 3 sensiblement annulaire. L'appareil de prise de vues est associé à un dispositif de nettoyage de la lentille comportant des moyens de projection d'un liquide de nettoyage sur la lentille, comportant notamment une buse de projection 4, et des moyens d'aspiration du liquide projeté, comportant notamment une chambre 5, une lèvre élastique déformable 6 en autorisant ou interdisant l'accès depuis l'extérieur, et une pompe 7 disposée sur une conduite la reliant à la chambre 5 pour permettre la mise sous vide de celle-ci et l'aspiration du liquide. Le dispositif de nettoyage comporte en outre un module de commande configuré pour commander la mise en oeuvre des moyens de nettoyage et des moyens d'aspiration du liquide de nettoyage utilisé, cette mise en oeuvre de l'un et de l'autre pouvant être simultanée ou différée.

La collerette 3 prend la forme d'une paroi annulaire qui s'étend en saillie de la face extérieure 10 du boîtier de réception et dont un bord intérieur 30 vient se placer au contact du bord périphérique extérieur de la lentille. Ainsi positionnée, la collerette 3 assure à la fois un maintien de la lentille et de la caméra relativement au boîtier 1 de réception de cette dernière, ainsi que l'étanchéité entre l'espace extérieur et l'intérieur de ce boîtier de réception. Avantageusement réalisée dans un matériau polymère présentant une certaine élasticité, la collerette 3 joue également un rôle d'amortisseur d'éventuelles vibrations du boîtier de réception 1 ou d'éventuels chocs sur celui-ci afin d'éviter tout déplacement de la lentille lors d'une prise de vue et, ainsi, d'améliorer la stabilité des prises de vues réalisées par la caméra. La collerette est creusée dans son épaisseur autour de la lentille pour aménager les chambres 5 susceptibles d'être mises sous vide par actionnement de la pompe 7.

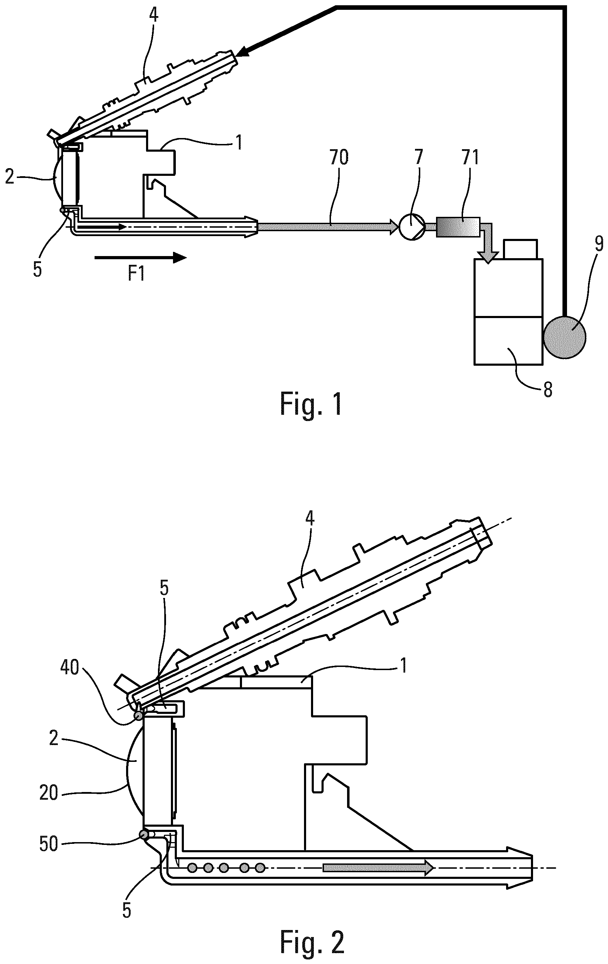

Le liquide de nettoyage est projeté sur la surface extérieure 20 de la lentille 2 par l'intermédiaire d'un orifice de distribution 40 agencé à une extrémité d'une buse de distribution 4, l'orifice de distribution 40 étant placé à proximité de la surface extérieure 20 de la lentille 2 pour que le liquide de nettoyage atteigne et se répande sur un maximum de cette surface extérieure. Selon différents modes de réalisation d'un tel dispositif de nettoyage, la buse de distribution 4 peut être fixe par rapport à la surface extérieure 20 de la lentille 2, ou elle peut être mobile entre une position déployée dans laquelle son orifice de distribution 40 se trouve à proximité de la surface extérieure 20 de la lentille 2 et une position rétractée, par exemple en retrait vers l'intérieur du boîtier 1, dans laquelle son orifice de distribution se trouve à distance de la surface extérieure 20 de la lentille 2. Un tel dispositif de nettoyage comporte en outre des moyens d'acheminement 9 (schématiquement représentés sur la figure 1) d'un liquide de nettoyage depuis un réservoir de stockage 8 (schématiquement représenté sur la figure 1) jusqu'à l'orifice de distribution 40.

La chambre 5 débouche en une ouverture 50 sur une portion au moins de la périphérie de la lentille 2. Avantageusement, cette chambre 5 est agencée au sein de la collerette 3 d'accueil de la lentille 2 dans le boîtier 1, et elle débouche sur la face extérieure 10 du boîtier sensiblement au centre de cette collerette. Selon le mode de réalisation préféré de l'invention illustré par les figures, l'ouverture débouchante 50 de la chambre 5 à la surface extérieure de la collerette 3 est annulaire autour de la lentille 2. Plus précisément, l'ouverture annulaire 50 par laquelle la chambre 5 débouche sur la face extérieure du boîtier est placée entre le bord intérieur 30 et le bord extérieur 31 de cette collerette. On pourra prévoir que la chambre 5 peut déboucher en une ou plusieurs ouvertures 50 occupant respectivement une portion angulaire du pourtour de la collerette 3. Dans le cas d'une ouverture unique, l'ouverture débouchante 50 de la chambre 5 sera avantageusement agencée en une région opposée, par rapport au centre de la lentille 2, à la position de l'orifice de distribution 40 du liquide de nettoyage. Dans le cas d'une pluralité d'ouvertures débouchantes, celles-ci seront avantageusement angulairement réparties de manière régulière à la périphérie de la lentille 2.

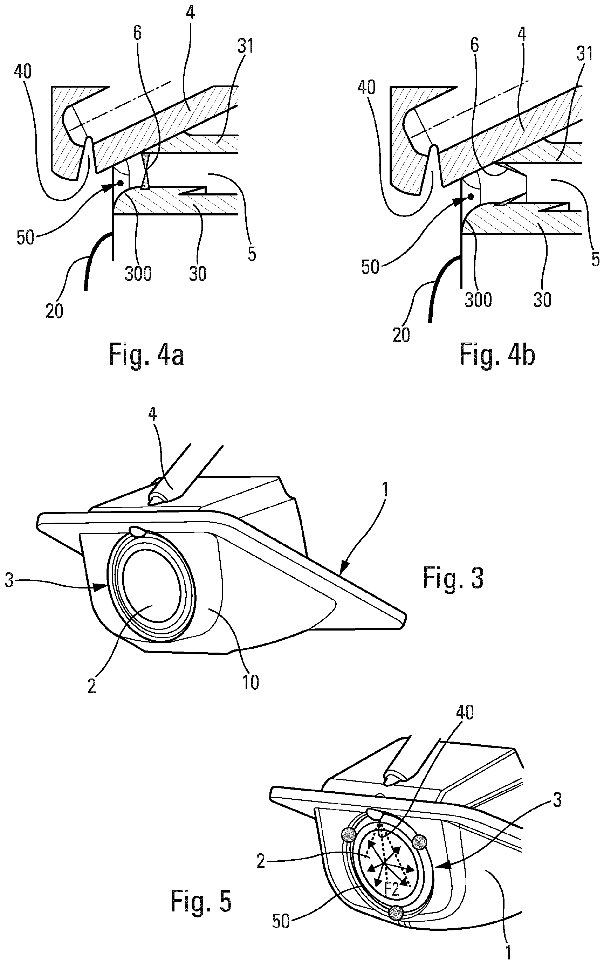

La chambre 5 comporte une lèvre d'étanchéité élastique 6 mobile entre une position fermée, plus particulièrement illustrée par la figure 4a, et une position ouverte, plus particulièrement illustrée par la figure 4b. Dans sa position ouverte, la lèvre d'étanchéité élastique 6 met en communication l'espace intérieur de la chambre 5 et l'espace extérieur au boîtier 1. Dans cette position, un liquide se trouvant sur la surface extérieure 20 de la lentille 2 peut être acheminé vers l'intérieur de la chambre 5 par l'ouverture débouchante 50 de celle-ci à la surface de la collerette 3. Dans la position fermée de la lèvre d'étanchéité élastique 6, l'espace extérieur au boîtier 1, et donc la surface externe de la lentille, et l'intérieur de la chambre 5 sont séparés de manière étanche, et la lèvre d'étanchéité élastique fait obstacle au passage du liquide se trouvant sur la surface extérieure 20 de la lentille 2. Selon le mode de réalisation préféré de l'invention illustré par les figures, dans lequel la chambre 5 débouche en une ouverture 50 annulaire dans la collerette 3, la buse de distribution du liquide de nettoyage et la chambre 5 sont avantageusement agencées de telle manière que l'orifice de distribution 40 se trouve à proximité de cette ouverture débouchante annulaire 50 lorsqu'il projette du liquide de nettoyage.

Le liquide de nettoyage est aspiré grâce à la pompe 7 qui est configurée pour pouvoir créer une dépression dans la chambre 5. La chambre 5 est mise en communication avec cette pompe 7 par une première conduite 70 faisant partie d'un circuit en boucle du liquide de nettoyage, ledit circuit en boucle comportant cette première conduite 70, une deuxième conduite 80 reliant la pompe au réservoir de stockage de liquide de nettoyage et les moyens d'acheminement 9. La dépression créée dans la chambre 5 est dimensionnée pour déformer la lèvre élastique d'étanchéité 6 et la forcer dans la position ouverte, laissant le passage au liquide de nettoyage depuis l'extérieur du boîtier 1 vers l'intérieur. Lorsque la pompe 7 est éteinte et que l'équilibre se forme, la lèvre élastique d'étanchéité 6 reprend naturellement sa position d'origine, c'est-à-dire la position fermée selon laquelle elle forme obstruction à l'entrée de liquide et de saletés dans la chambre.

La lèvre d'étanchéité élastique 6 est, dans le mode de réalisation illustré, formée de deux parties 6a, 6b dont l'une est solidaire à une de ses extrémités du bord intérieur 30 de la collerette et l'autre est solidaire à une de ses extrémités du bord extérieur 31 de la collerette (visible sur les figures 4a et 4b). En position de repos, c'est-à-dire en position fermée (visible sur la figure 4a), les deux parties de la lèvre s'étendent sensiblement perpendiculairement aux parois auxquelles elles sont respectivement fixées en se chevauchant sur leur extrémité libre à l'intérieur de la chambre, afin de bloquer le passage vers l'intérieur. Lorsque la dépression est fait à l'intérieur de la chambre 5, par l'intermédiaire de la pompe 7, les deux parties 6a, 6b de la lèvre sont aspirées vers la pompe et donc vers le fond de la chambre 5 à l'opposé de l'ouverture débouchante 50, en dégageant un chemin entre les extrémités libres des deux parties. On comprend que ce mode de réalisation de la lèvre d'étanchéité n'est donné qu'à titre d'exemple et que celle-ci pourrait ne comporter qu'une partie, dès lors qu'elle est solidaire à une de ses extrémités à l'un des bords de la collerette et que l'extrémité libre peut s'escamoter vers le fond de la chambre dès que la pompe 7 est actionnée.

On va maintenant décrire le fonctionnement du dispositif, selon différents modes de réalisation de l'invention dans lesquels l'ouverture ou la fermeture de la lèvre d'étanchéité élastique 6 est ou non synchronisée avec la distribution du liquide de nettoyage par l'orifice de distribution 40.

Dans un premier mode de réalisation dans lequel l'ouverture de la lèvre d'étanchéité élastique 6 n'est pas synchronisée avec la distribution de liquide de nettoyage, on prévoit dans une première étape, alors que la lèvre d'étanchéité élastique 6 est dans sa position fermée, de projeter un liquide de nettoyage sur la surface extérieure 20 de la lentille 2, par l'orifice de distribution 40. Le liquide de nettoyage se répand sur la surface extérieure 20 de la lentille 2 pendant un temps prédéfini, avant que le module de commande génère une instruction d'ouverture de cette lèvre d'étanchéité élastique par la mise en marche de la pompe 7. Il s'ensuit qu'une dépression est créée dans la chambre 5, entraînant la lèvre élastique en position d'ouverture et il résulte de cette dépression une aspiration par l'ouverture débouchante 50, vers l'intérieur de la chambre 5. Le liquide de nettoyage reposant sur la lentille ou sur la collerette est ainsi guidé par aspiration vers la chambre 5, depuis laquelle il est acheminé, selon une direction illustrée par la flèche F1 sur la figure 1, jusqu'à la pompe 7. Selon le mode de réalisation plus particulièrement illustré par la figure 1, le liquide de nettoyage est ensuite acheminé à travers un ensemble de filtrage 71, puis il est renvoyé dans le réservoir de stockage 8 où il est recyclé pour une opération ultérieure de nettoyage.

Afin de favoriser le passage de liquide de nettoyage à la surface de la lentille 2 vers la chambre, l'invention prévoit en outre que la surface extérieure 20 de cette lentille soit recouverte d'une couche d'un matériau hydrophobe. Ainsi, et comme le montrent les flèches F2 sur la figure 6, une fois le liquide de nettoyage projeté sur la surface extérieure 20 de la lentille 2, il sera physiquement repoussé vers les bords de la lentille 2, c'est-à-dire vers la collerette 3 et vers l'ouverture débouchante 50. De plus, afin de favoriser le transfert de liquide de nettoyage vers la chambre 5, l'invention prévoit qu'au moins le bord intérieur de la collerette 3 présente, en section, un profil arrondi 300, visible sur les figures 4a et 4b. Ainsi, toute goutte de liquide de nettoyage qui atteindra le bord intérieur de la collerette 3 sera guidée, par ce profil arrondi 300, vers l'ouverture débouchante 50 et, de là, vers la chambre 5.

Dans un mode alternatif de réalisation de l'invention, la distribution de liquide de nettoyage peut être synchronisée, c'est-à-dire simultanée, avec l'ouverture de la lèvre d'étanchéité élastique 6. Dans ce cas, l'aspiration par l'ouverture de la chambre débouchante 50 contribue à l'étalement du liquide de nettoyage sur la surface extérieure 20 de la lentille 2, et ce, d'autant plus que cette ouverture débouchante 50 s'étend annulairement autour de la lentille 2, comme illustré par les figures. Un tel mode de réalisation permet ainsi de réduire la durée du cycle de nettoyage de la lentille, l'aspiration par la chambre 5 conduisant alors à une forme de circulation forcée du liquide de nettoyage sur la surface extérieure 20 de la lentille 2, circulation forcée renforcée par l'existence de la courbure de la lentille et par la présence éventuelle, sur la surface extérieure de celle-ci, du revêtement hydrophobe précédemment cité. On comprend que la présence d'un revêtement hydrophobe dans ce mode de réalisation n'est pas aussi nécessaire que dans le cas précédent.

Telle qu'elle vient d'être décrite dans chacun de ses modes de réalisation, la présente invention permet la mise en place d'un moyen d'évacuation d'un liquide de nettoyage préalablement projeté sur une lentille de caméra, qui est particulièrement simple à mettre en place, qui est interne au boîtier de réception de la caméra et donc non sensible aux conditions extérieures, et qui peut en outre participer à un circuit en boucle permettant le recyclage du liquide de nettoyage.

## Revendications

1. Dispositif de nettoyage d'un capteur optique (2) d'un système de détection optique d'un véhicule automobile, qui comprend des moyens de projection (4) d'un liquide de nettoyage sur une surface extérieure (20) de ce capteur optique (2), **caractérisé en ce qu'**il comporte des moyens d'aspiration (7), dont une chambre (5) débouche sur au moins une portion de la périphérie de ce capteur optique.

2. Dispositif selon la revendication 1, **caractérisé en ce que** la chambre (5) débouche sur une portion de la périphérie du capteur optique (2) opposée à la région depuis laquelle le liquide de nettoyage est projeté sur la surface extérieure (20) de ce capteur optique (2).

3. Dispositif selon la revendication 1, **caractérisé en ce que** la chambre (5) est débouchante sur la totalité de la périphérie du capteur optique (2).

4. Dispositif selon l'une des revendications précédentes, **caractérisé en ce que** le capteur optique (2) est monté dans un boîtier (1) de réception du système de détection optique auquel ce capteur optique (2) est associé, en étant ajusté à l'intérieur d'une collerette (3) définie sur une paroi du boîtier (1), la chambre (5) étant creusée dans l'épaisseur de cette collerette (3).

5. Dispositif selon la revendication précédente, **caractérisé en ce que** l'ouverture débouchante (50) de la chambre (5) est disposée entre un bord intérieur (30) de la collerette (3) qui vient se placer au contact du bord périphérique extérieur du capteur optique (2) et un bord extérieur (31) de ladite collerette.

6. Dispositif selon l'une des revendications précédentes, **caractérisé en ce que** la chambre (5) comporte une lèvre d'étanchéité élastique (6) mobile entre une position fermée dans laquelle elle interdit tout passage de liquide entre la surface extérieure (20) du capteur optique (2) et l'intérieur de la chambre (5) et une position ouverte dans laquelle elle autorise le passage de liquide de la surface extérieure (20) du capteur optique (2) vers l'intérieur de la chambre (5).

7. Dispositif selon la revendication précédente, **caractérisé en ce que** la lèvre d'étanchéité élastique (6) est mobile d'une position à l'autre sous l'effet de l'actionnement des moyens d'aspiration (7) agencés pour mettre sous vide ladite chambre (5)

8. Dispositif selon l'une quelconque des revendications 6 ou 7, **caractérisé en ce que** les moyens d'aspiration (7) sont configurés pour rejeter le liquide aspiré dans un réservoir de stockage (8) pour l'alimentation des moyens de projection en liquide de nettoyage du capteur optique (2).

9. Dispositif selon l'une des revendications précédentes, **caractérisé en ce que** les moyens d'aspiration (7) sont synchronisés avec des moyens de commande de la distribution de liquide.

10. Système de détection optique pour véhicule automobile qui comprend au moins un dispositif de nettoyage d'un capteur optique (2) dudit système, selon l'une quelconque des revendications précédentes, **caractérisé en ce que** la surface extérieure (20) du capteur optique (2) est revêtue d'une couche d'un matériau hydrophobe.

## Patentansprüche

1. Vorrichtung zur Reinigung eines optischen Sensors (2) eines optischen Erfassungssystems eines Kraftfahrzeugs, welche Mittel zum Spritzen (4) einer Reinigungsflüssigkeit auf eine äußere Fläche (20) dieses optischen Sensors (2) umfasst, **dadurch gekennzeichnet, dass** sie Saugmittel (7) aufweist, von denen eine Kammer (5) auf wenigstens einen Abschnitt des Umfangs dieses optischen Sensors mündet.

2. Vorrichtung nach Anspruch 1, **dadurch gekennzeichnet, dass** die Kammer (5) auf einen Abschnitt des Umfangs des optischen Sensors (2) mündet, der dem Bereich gegenüberliegt, von dem aus die Reinigungsflüssigkeit auf die äußere Fläche (20) dieses optischen Sensors (2) gespritzt wird.

3. Vorrichtung nach Anspruch 1, **dadurch gekennzeichnet, dass** die Kammer (5) auf den gesamten Umfang des optischen Sensors (2) mündet.

4. Vorrichtung nach einem der vorhergehenden Ansprüche, **dadurch gekennzeichnet, dass** der optische Sensor (2) in einem Gehäuse (1) zur Aufnahme des optischen Erfassungssystems, dem dieser optische Sensor (2) zugeordnet ist, angebracht ist, indem er im Inneren eines Kragens (3) eingepasst ist, der auf einer Wand des Gehäuses (1) definiert ist, wobei die Kammer (5) in die Dicke dieses Kragens (3) eingelassen ist.

5. Vorrichtung nach dem vorhergehenden Anspruch, **dadurch gekennzeichnet, dass** die Mündungsöffnung (50) der Kammer (5) zwischen einem inneren Rand (30) des Kragens (3), der mit dem äußeren Umfangsrand des optischen Sensors (2) in Kontakt kommt, und einem äußeren Rand (31) dieses Kragens angeordnet ist.

6. Vorrichtung nach einem der vorhergehenden Ansprüche, **dadurch gekennzeichnet, dass** die Kammer (5) eine elastische Dichtlippe (6) aufweist, die zwischen einer geschlossenen Position, in welcher sie jeden Durchfluss von Flüssigkeit zwischen der äußeren Fläche (20) des optischen Sensors (2) und dem Inneren der Kammer (5) verhindert, und einer geöffneten Position, in welcher sie den Durchfluss von Flüssigkeit von der äußeren Fläche (20) des optischen Sensors (2) zum Inneren der Kammer (5) hin ermöglicht, beweglich ist.

7. Vorrichtung nach dem vorhergehenden Anspruch, **dadurch gekennzeichnet, dass** die elastische Dichtlippe (6) unter der Wirkung der Betätigung der Saugmittel (7), die dafür ausgelegt sind, die Kammer (5) unter Vakuum zu setzen, von einer Position zur anderen beweglich ist.

8. Vorrichtung nach einem der Ansprüche 6 oder 7, **dadurch gekennzeichnet, dass** die Saugmittel (7) dafür ausgebildet sind, die angesaugte Flüssigkeit in einen Vorratsbehälter (8) zur Versorgung der Spritzmittel mit Reinigungsflüssigkeit des optischen Sensors (2) zurückzuleiten.

9. Vorrichtung nach einem der vorhergehenden Ansprüche, **dadurch gekennzeichnet, dass** die Saugmittel (7) mit Mitteln zur Steuerung der Flüssigkeitsverteilung synchronisiert sind.

10. Optisches Erfassungssystem für ein Kraftfahrzeug, welches wenigstens eine Vorrichtung zur Reinigung eines optischen Sensors (2) dieses Systems nach einem der vorhergehenden Ansprüche umfasst, **dadurch gekennzeichnet, dass** die äußere Fläche (20) des optischen Sensors (2) mit einer Schicht eines hydrophoben Materials überzogen ist.

## Claims

1. Device for cleaning an optical sensor (2) of an optical detection system of a motor vehicle, which comprises spray means (4) for spraying a cleaning liquid onto an exterior surface (20) of this optical sensor (2), **characterized in that** it comprises suction means (7) of which a chamber (5) opens onto at least a portion of the periphery of this optical sensor.

2. Device according to claim 1, **characterized in that** the chamber (5) opens onto a portion of the periphery of the optical sensor (2) opposite to the region from which the cleaning liquid is sprayed onto the exterior surface (20) of this optical sensor (2).

3. Device according to claim 1, **characterized in that** the chamber (5) opens onto the entire periphery of the optical sensor (2).

4. Device according to one of the preceding claims, **characterized in that** the optical sensor (2) is mounted in a casing (1) that houses the optical detection system with which this optical sensor (2) is associated, being fitted tightly inside a collar (3) defined on a wall of the casing (1), the chamber (5) being hollowed into the thickness of this collar (3).

5. Device according to the preceding claim, **characterized in that** the emergent opening (50) of the chamber (5) is arranged between an interior edge (30) of the collar (3) which becomes placed in contact with the exterior peripheral edge of the optical sensor (2), and an exterior edge (31) of the said collar.

6. Device according to one of the preceding claims, **characterized in that** the chamber (5) comprises an elastic sealing lip (6) able to move between a closed position in which it prevents any passage of liquid between the exterior surface (20) of the optical sensor (2) and the inside of the chamber (5), and an open position in which it allows the passage of liquid from the exterior surface (20) of the optical sensor (2) towards the inside of the chamber (5).

7. Device according to the preceding claim, **characterized in that** the elastic sealing lip (6) is able to move from one position to the other under the effect of the actuation of the suction means (7) designed to evacuate the said chamber (5).

8. Device according to either one of claims 6 and 7, **characterized in that** the suction means (7) are configured to discharge the sucked-up liquid into a storage reservoir (8) for supplying the means of spraying the optical sensor (2) with cleaning liquid.

9. Device according to one of the preceding claims, **characterized in that** the suction means (7) are synchronized with the means of commanding the distribution of liquid.

10. Optical detection system for a motor vehicle which comprises at least one device for cleaning an optical sensor (2) of the said system, according to any one of the preceding claims, **characterized in that** the exterior surface (20) of the optical sensor (2) is covered with a layer of a hydrophobic material.
